(19)

Europäisches
Patentamt
European
Patent Office
Office européen
des brevets

(11) **EP 2 940 914 A2**

(12) **EUROPEAN PATENT APPLICATION**

(43) Date of publication:
**04.11.2015 Bulletin 2015/45**

(51) Int Cl.:
*H04L 1/00* [(2006.01)]     *H04L 1/16* [(2006.01)]

(21) Application number: **15162935.9**

(22) Date of filing: **09.04.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **09.04.2014 GB 201406409**

(71) Applicant: **Neul Limited
Cambridgeshire CB24 9AD (GB)**

(72) Inventor: **Smith, Peter
Histon, Cambridgeshire CB24 9AD (GB)**

(74) Representative: **Slingsby Partners LLP
5 Chancery Lane
London EC4A 1BL (GB)**

(54) **PROBABILISTIC DATA STRUCTURES**

(57)     A communication device configured to identify a message that it has received successfully from another communication device and transmit an acknowledgement of the message that ambiguously identifies the message as being a message that was successfully received by the communication device. The communication device may be configured to form the acknowledgement using a bit-field that consists of a first number of set bits and a second number of non-set bits. The communication device may compress the bit-field for transmission representing the bit-field by an identifier that identifies its arrangement of the first number of set bits and the second number of non-set bits uniquely amongst the number of possible arrangements of those bits within the bit-field.

*FIG. 3*

**Description**

This invention relates to a method for generating and compressing a probabilistic data structure and to a method and communication device for acknowledging successfully received packets in a communication network.

Some radio systems are very limited in bandwidth. This can impose severe constraints upon how the radio system is operated. In particular, radio networks with a star topology (i.e. a single base station serving many terminals) may have very asymmetric overall data rates (i.e. the base station can transmit much less information than it can receive).

For example, a base station in a star-topology radio network might operate with constrained duty cycle and transmit power. Yet it needs to be able to serve many terminals in its coverage cell. As a result, it may be able to transmit only a very small amount of information in response to each message it receives from a terminal. Throughput-limited radio systems such as this may have very little capacity for sending acknowledgements. Some systems may have less than 10 bits available per received message. This may not be sufficient to schedule traffic, or send unambiguous acknowledgements. Therefore there is a need for an improved mechanism for compressing data representing acknowledgements and the like.

According to a first embodiment, there is provided a communication device configured to identify a message that it has received successfully from another communication device and transmit an acknowledgement of the message that ambiguously identifies the message as being a message that was successfully received by the communication device.

The communication device may be configured to form the acknowledgement to acknowledge a group of messages that it has received successfully and to ambiguously identity those messages such that the acknowledgement acknowledges more messages than were received successfully by the communication device.

The communication device may be configured to identify information that uniquely identifies each message that it has received successfully and form the acknowledgement in dependence on that information.

The communication device may be configured to identify, as the information, one or more of the identity of the communication device from which it received the message, the contents of the message and metadata associated with the message.

The communication device may be configured to form the acknowledgement by inputting the information into a hash function that maps the information to one or more locations in a bit-field.

The communication device may be configured to set a bit in each of the one or more locations that the information is mapped to by the hash function to represent the message.

The communication device may be configured to form the acknowledgment by inputting the information into a hash function that will map different information to the same one or more locations in the bit-field.

The communication device may be configured to form the acknowledgement to be a probabilistic data structure.

The communication device may be configured to form the acknowledgement to be an error-resilient probabilistic data structure.

The communication device may be configured to form the acknowledgement to be an error-resilient probabilistic data structure that incorporates redundancy by setting more bits in the probabilistic data structure to identify a successfully received message than a communication device receiving the acknowledgement will require to be set in the probabilistic data structure in order to recognise that message as having been successfully received.

The communication device may be configured to map some messages that it has received successfully to more locations in the bit field that other messages that it has received successfully.

The communication device may be configured to form the acknowledgment by representing the bit-field as a binomial coefficient that represents the number of possible arrangements of set and non-set bits in the bit-field.

The communication device may be configured to associate a successfully received message with a particular message category and form the acknowledgement of that message in dependence on its message category.

The communication device may be configured to form the acknowledgment such that the message is identified with a degree of ambiguity that is dependent on its message category.

The communication device may be configured to not acknowledge some messages that it received successfully in dependence on a message category associated with those messages.

The communication device may be configured to, prior to transmitting the acknowledgement, identify messages that it has not received successfully.

The communication device may be configured to transmit a negative acknowledgment identifying the messages that it has not received successfully.

The communication device may be configured to transmit a negative acknowledgement that ambiguously identifies the messages that have not been successfully received.

The communication device may be configured to associate each message that it has successfully received with a timeslot and form the acknowledgement as a bit-field in which each set bit represents a message that was successfully received, the order of the set bits in the bit field reflecting the order of the time slots associated with the messages that those set bits represent.

The communication device may be configured to, if it determines that two of the messages are represented by the same location in the bit-field, incorporate information to resolve this ambiguity in the acknowledgement.

The communication device may be configured to associate one or messages with a reliability value and to form the acknowledgement as a bit-field in which a message having a higher reliability value is represented by more entries in the bit-field than a message having a lower reliability value.

The communication device may be configured to transmit acknowledgements of fixed length, whereby the ambiguity with which a message is identified varies in dependence on the number of messages that the communication device has successfully received.

The communication device may be configured to transmit acknowledgements that identify a successfully received message with a fixed degree of ambiguity, whereby the length of the acknowledgements varies in dependence on the number of messages that the communication device has successfully received.

The communication device may be configured to form the acknowledgement to include an encrypted version of a message that it has successfully received.

According to a second embodiment, there is provided a communication device configured to adjust the number of times that it retransmits a message to another communication device in dependence on a degree of ambiguity that is associated with acknowledgements of its messages that it receives from that communication device.

According to a third embodiment, there is provided a method for acknowledging a message received successfully from a communication device comprising transmitting an acknowledgement of the message that ambiguously identifies the message as being a message that was successfully received by the communication device.

According to a fourth embodiment, there is provided a method for encoding a bit-field that consists of a first number of set bits and a second number of non-set bits, the method comprising determining the number arrangements of the first number of set bits and the second number of non-set bits that are possible within the bit-field and representing the bit-field by an identifier that identifies its arrangement of the first number of set bits and the second number of non-set bits uniquely amongst the number of possible arrangements of those bits within the bit-field.

The method may comprise representing the bit-field by a number that is less than or equal to the number of possible arrangements of the bits within the bit-field.

The method may comprise determining the number of possible arrangements of the bits within the bit-field to be the binomial coefficient that represents the number of arrangements of the first number of set bits and the second number of non-set bits that is possible within a bit-field having a length equal to the sum of the first and second numbers.

The method may comprise forming the identifier by summing selected coefficients in Pascal's triangle along a path that commences with the binomial coefficient.

The method may comprise designating one of the set bits or the non-set bits as being a majority bit type and the other of the set bits and the non-set bits as being a minority bit type in dependence on which of the first and second numbers is larger.

The method may comprise forming the identifier by selecting a first bit from the bit-field, identifying the two coefficients in the preceding row of Pascal's triangle to the binomial coefficient that lie on a diagonal path relative to the binomial coefficient, selecting the inner of those two coefficients as a coefficient on the path if the first bit is a majority bit, selecting the outer of those two coefficients as a coefficient on the path if the first bit is a minority bit

The method may comprise, if the first bit is a majority bit, summing the coefficient of the two coefficients that is not the path coefficient in an accumulator.

The method may comprise, if the first bit is a minority bit, leaving the accumulator unchanged.

The method may comprise repeating the above steps for each subsequent bit in the bit-field, wherein each successive step treats the path coefficient of the preceding step as the binomial coefficient, until either: (i) the path reaches the edge of Pascal's triangle or (ii) the above steps have been performed for all bits in the bit-field.

The method may comprise forming the bit-field by, for each element represented by the bit-field, setting a bit at a single location in the bit-field.

The method may comprise forming the bit-field by applying a hash function to data representing an element to be represented by the bit-field.

The method may comprise applying a hash function that maps that data to one location in the bit-field.

The method may comprise applying a hash function that maps data representing different elements to the same location in the bit-field.

According to a fifth embodiment, there may be provided a probabilistic data structure encoded according to the above method.

According to a sixth embodiment, there is provided a communication device configured to form an acknowledgement that ambiguously identifies a message as being a message that was successfully received by the communication device by representing that message via one or more entries in a bit-field and encoding that bit-field in accordance with the above method.

According to a seventh embodiment, there is provided an apparatus for encoding a bit-field that consists of a first number of set bits and a second number of non-set bits, the apparatus being configured to determine the number arrangements of the first number of set bits and the second number of non-set bits that are possible within the bit-field and represent the bit-field by an identifier that identifies its arrangement of the first number of set bits and the second number of non-set bits uniquely amongst the number of possible arrangements of those bits within the bit-field.

According to an eighth embodiment, there is provided a method for decoding an identifier that represents a bit-field consisting of a first number of set bits and a second number of non-set bits, the method comprising determining a binomial coefficient that represents the number of arrangements of the first number of set bits and the second number of non-set bits that is possible within a bit-field having a length equal to the sum of the first and second numbers, identifying a combination of binomial coefficients in Pascal's triangle that sum to form the identifier, and determining the arrangement of set bits and non-set bits in the bit-field in dependence on a path through Pascal's triangle that is represented by the identified combination of binomial coefficients and which commences at the binomial coefficient representing the number of possible arrangements.

The method may comprise designating one of the set bits or the non-set bits as being a majority bit type and the other of the set bits and the non-set bits as being a minority bit type in dependence on which of the first and second numbers is larger.

The method may comprise determining the bit type of a first bit in the bit-field by identifying a coefficient in the preceding row of Pascal's triangle to the binomial coefficient that lies on a diagonal path relative to the binomial coefficient, if that coefficient is less than the identifier, determining that the first bit is a majority bit type; and if that coefficient is more than the identifier, determining that the first bit is a minority bit type.

The method may comprise repeating the above steps for subsequent bits in the bit-field by: if the coefficient is less than the identifier, decrementing the coefficient from the identifier and treating the decremented value as the identifier for the succeeding step; and if the coefficient is more than the identifier, leaving the identifier unchanged for the succeeding step.

According to a ninth embodiment, there is provided an apparatus for decoding an identifier that represents a bit-field consisting of a first number of set bits and a second number of non-set bits, the apparatus being configured to determine a binomial coefficient that represents the number of arrangements of the first number of set bits and the second number of non-set bits that is possible within a bit-field having a length equal to the sum of the first and second numbers, identify a combination of binomial coefficients in Pascal's triangle that sum to form the identifier, and determine the arrangement of set bits and non-set bits in the bit-field in dependence on a path through Pascal's triangle that is represented by the identified combination of binomial coefficients and which commences at the binomial coefficient representing the number of possible arrangements.

According to a tenth embodiment, there is provided a scheduler for scheduling communications of a plurality of terminals over a communication network, the scheduler being configured to form a probabilistic data structure to represent the allocation of communication resources to the plurality of terminals by mapping each allocation to at least one location in the probabilistic data structure and by mapping at least two of said allocations to the same location, and cause the allocations to map to locations in the probabilistic data structure whose arrangement with respect to each other reflects a relative arrangement of the allocated communication resources.

The scheduler may be configured to allocate each of the plurality of communication terminals a timeslot for communicating over the network and cause the allocations to map to locations whose arrangement with respect to each other reflects the relative arrangement in time and/or frequency of the allocated timeslots.

The present invention will now be described by way of example with reference to the accompanying drawings. In the drawings:

Figure 1 illustrates an overview of a method for encoding a data field;

Figure 2 illustrates a base station acknowledging all successfully received messages;

Figure 3 illustrates a base station acknowledging more messages than were successfully received;

Figure 4 illustrates a probabilistic acknowledgement;

Figure 5 illustrates a method for acknowledging messages;

Figure 6 illustrates a method for generating a probabilistic data structure;

Figure 7 illustrates sequencing information in a bit-field;

Figure 8 illustrates a method for encoding a bit-field;

Figure 9 illustrates an encoding path in Pascal's triangle;

Figure 10 illustrates an example of an apparatus for coding a bit-field;

Figure 11 illustrates an example of a composite probabilistic data structure; and

Figure 12 illustrates an example of a communication device.

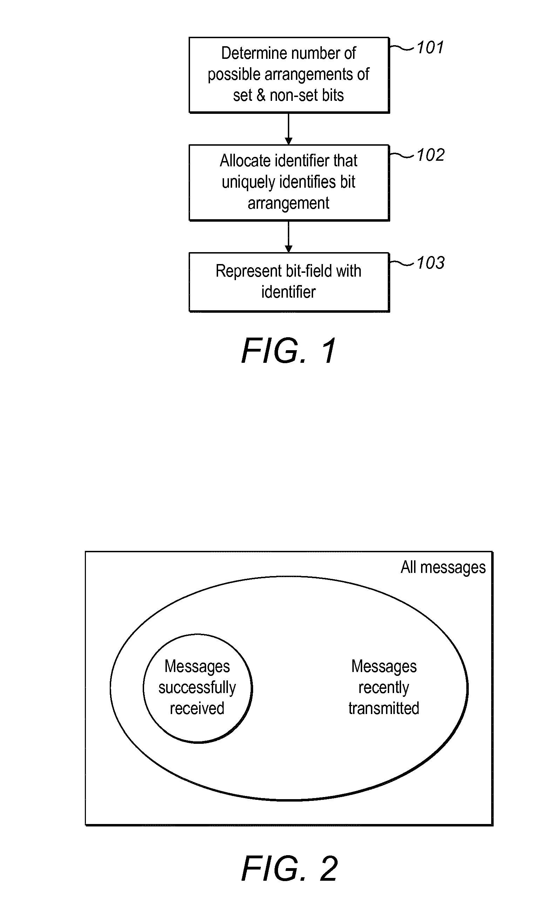

An overview of a method for encoding a bit-field is shown in Figure 1. The bit-field suitably consists of a first number of set bits and a second number of non-set bits. The set bits may be "ones" and the non-set bits "zeroes" or vice versa. The method may comprise determining the number arrangements of the first number of set bits and the second number of non-set bits that are possible within the bit-field (step 101). The bit field is then allocated an identifier that uniquely identifies its particular arrangement of set bits and non-set bits amongst the range of possible arrangements of those bits (step 102). This identifier may thereafter be used to represent the bit-field (step 103), and can therefore be considered a compressed version of the bit-field.

The method will now be described in more detail with reference to a specific application in which the probabilistic data structure is used to convey acknowledgements between two communication devices in a communication network. This is for the purposes of example only and the method is not limited to being used in any specific application. Further examples of applications in which the method may be usefully employed are described later in this document. These other described applications, and indeed any other application of the method, will make use of the same principles and techniques described below with respect to sending acknowledgments.

Similarly the description below focusses on a base station generating and an encoding a probabilistic data structure. This is because using a probabilistic data structure to transmit acknowledgements is likely to be of particular use to a base station, which will typically have large numbers of messages to acknowledge. It should be understood that the principles and techniques described below might equally be implemented by any communication device and is not limited to base stations. Thus the principles and techniques described herein might be implemented by communication terminals.

In some sense all acknowledgement systems are likely to be unreliable, at the very least because acknowledgements are subject to the same sorts of errors and problems as normal data packets. In these cases the unreliability is a problematic byproduct of a radio system. In some of the methods described herein, however, unreliability is deliberately introduced into the acknowledgement system as a mechanism to improve encoding efficiency.

A base station may be configured to send a "set" of acknowledgements. Each message the base station successfully receives (e.g. by passing a CRC check) is entered into the set. To verify whether a message has been received, a terminal simply checks whether its message is a member of the acknowledged set. This is shown in Figure 2. Messages transmitted recently by a terminal might have been received by the base station. The base station acknowledges these messages. The terminal checks whether its message is in the acknowledged set. In many radio systems, however, there is not sufficient bandwidth to unambiguously acknowledge each received message. This may be addressed using a probabilistic approach.

Under a probabilistic approach the base station acknowledges a set of messages that is not the same as the set it actually received. In many instances the base station will ambiguously identify the successfully received messages. The practical effect of this is that the base station appears from its acknowledgements to have successfully received more messages than in actually has. Under this approach, a terminal is not guaranteed to get a reliable acknowledgement for a received message. Instead it may receive a false positive acknowledgement with probability $\varepsilon$.

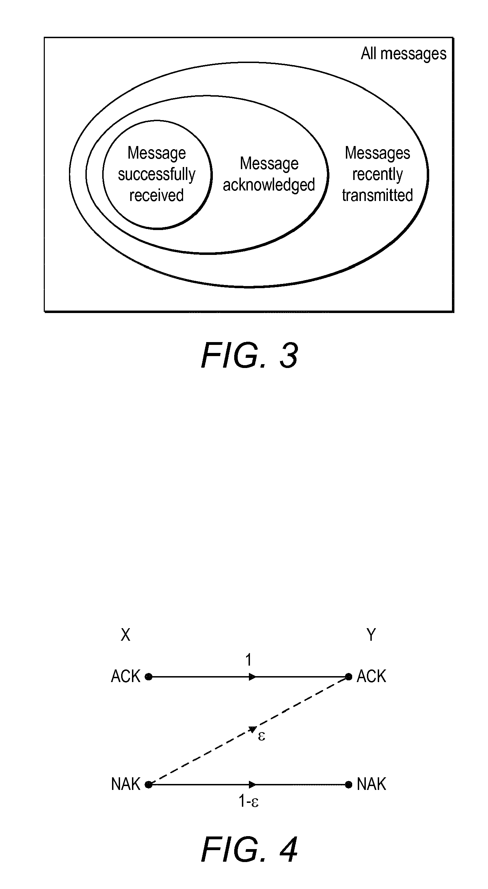

An example of this approach is shown in Figures 3 and 4. The base station ambiguously acknowledges messages that it has recently received. A consequence of this ambiguity is that a superset of these messages is viewed as acknowledged by the terminals. According to this probabilistic acknowledgement scheme, the terminal may sometimes receive an incorrect answer when checking whether its message is in the acknowledged set. The trade-off with this potential downside is that the base station's acknowledgements consume fewer communication resources.

A consequence of a probabilistic acknowledgement scheme is that terminals do not discover that their messages have been delivered with certainty. Instead each acknowledgement is paired with an error probability. The terminal may be configured to combine an acknowledgement coupled with an error probability with other information (e.g. link quality and previously received ACKs/NAKs) to compute the likelihood of a message's successful delivery. Terminals may repeat the transmission acknowledgement sequence to improve the reliability of the message. Terminals may alternatively transmit multiple times before requesting acknowledgement, according to the error probability of the channel.

A key feature of probabilistic acknowledgement is that it requires much less information than reliable acknowledgement. The minimal amount of information for a probabilistic data structure is expressed in Equation 1:

$$m = \frac{1}{k}\log_2 \binom{k/\epsilon}{k} \approx \log_2 \frac{1}{\epsilon} \qquad (1)$$

Equation 1 expresses the theoretical minimal number of information bits m required per message, when there are k messages, to acknowledge with a false positive error rate of $\epsilon$.

As an example, if the false error rate is 0.5%, Equation 1 suggests that between 8 and 11.3 bits are minimally required per message acknowledgement, depending upon the number of messages (k).

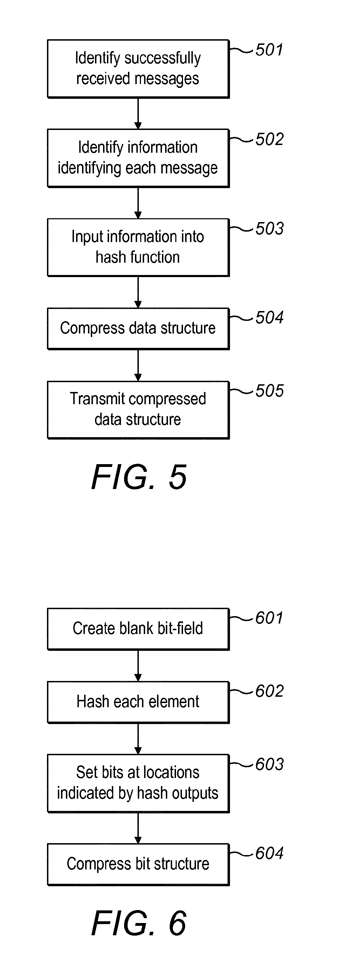

An example of a method that a base station may employ to acknowledge messages received over a communication network is shown in Figure 5. First the base station identifies which messages it has received successfully (step 501). The base station then identifies a piece of information that uniquely identifies each message to be acknowledged (step 502). This information is preferably also known by the terminal so that it can check whether its message is part of the acknowledged set or not. The information could, for example, be composed of a combination of the terminal's identity, the message contents and/or its metadata. Probabilistic data structures typically use hash functions. Therefore, the base station may generate a probabilistic data structure by inputting each piece of unique information into a hash function (step 503). This might be a single hash function or a set of hash functions. Several forms of probabilistic data structures may be used. For example, one approach is to insert each acknowledged message into a Bloom filter before transmission. Other encoding formats may be more space-efficient (and an example is described below). The base station preferably compresses the probabilistic data structure (step 504) before transmitting it over the network (step 505).

The base station transmits an encoding of the probabilistic data structure periodically. The terminals that have transmitted a message within this period should test whether their message is represented in the probabilistic data structure. If the message is not present, it has definitely not been received by the base station. If it is present in the set, then it probably has been received by the base station (with a known probability).

Some probabilistic data structures (such as Bloom filters) are error-resilient, in that some bits within the data structure can be corrupted without significantly compromising the information within it. For example, a small number of bits in a Bloom filter might be incorrectly received, yet the Bloom filter would still provide the correct answer for most lookup operations. Error-resilient probabilistic data structures such as this may be used to transfer information in a lossy channel without incurring the capacity overheads of forward error correction (FEC).

This error-resilience may be improved by adding some redundancy to the Bloom filter encoding and lookup operation. In a typical Bloom filter lookup it is expected that all bits within a group are set. For example, if an item causes 10 bits to be set when inserted into the Bloom filter, the corresponding lookup operation requires all 10 bits to be set (i.e. it has a threshold of exactly 10 bits set in 10 specific locations). Redundancy may be added by, for example, reducing the lookup threshold number of set bits (e.g. at least 8 out of 10 bits set). Furthermore, a different level of resilience can be provided to different items encoded within the data structure. A lower level of error-resilience can be provided to some items by setting fewer bits, thereby reducing the false positive rate for the probabilistic data structure.

An example of a method for generating a probabilistic data structure that is more space-efficient than that generated by a Bloom filter is shown in Figure 6. This method may optionally be used by a base station (or any other communication device) as part of a probabilistic acknowledgement system, to improve performance.

The method and the data structure it generates use the properties of binomial coefficients to encode a probabilistic data structure in the most space-efficient manner.

First, a large blank bit-field of length n is created (step 601). Let $k_{initial}$ elements be entered into the set. To achieve this, a hash of each element is constructed (step 602). The hash output is constrained to be within a chosen range [0, n-1] of length n. For each hash output, a bit is set in the bit-field at the index given by hash output (step 603). Occasionally, these hash outputs overlap; this reduces the number of set bits to k, where $k \leq k_{initial}$. A sparse n-bit bit-field has been created, with k bits set and (n-k) bits not set. The false-positive probability for this representation is k/n. Typical values might be n=20,000 and k=50.

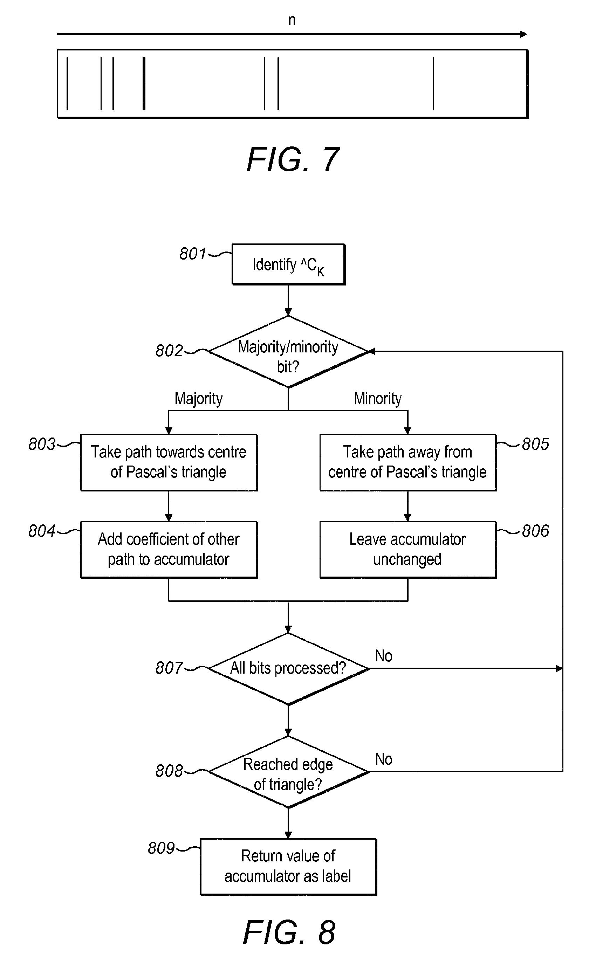

In contrast to a Bloom filter, this probabilistic data structure can generate sequencing information since each element is mapped to one location in the bit-field rather than multiple locations. The sparse nature of the bit-field renders this single-bit approach practical (otherwise the false positive rate might be unacceptably high). In the encoding process, each entry in the probabilistic data structure is assigned a random bit position. These bit positions can be read to generate a sequence of entries. With only knowledge about one entry, it is possible to determine its position in this sequence. For example, if in Figure 7, a terminal knows that entry 701 is something it is interested in, it also knows that entry 701 is in position 4 out of a sequence of 8 entries. This sequencing information can be useful in some applications. Some examples are described below.

Next, this sparse bit-field is compressed (step 604). Since every bit in the bit-field has the same probability of being set (i.e. there is no structure to the bit-field), every unique combination of k set bits is equally likely. There are $^nC_k$ possible combinations, where $^nC_k$ is the binomial coefficient. This means that any binary encoding of the data structure will use at least $\log_2(^nC_k - 1)$ bits. For example, if n=1,000 and k=50, at least 283 bits are required. Note that the value of k should also be encoded (requiring $\log_2(n)$ bits, or 10 bits in this example).

One technique for compressing the bit-field involves uniquely labelling each of these $^nC_k$ combinations, such that there are $^nC_k$ labels in the range [0, $^nC_k$ - 1]. This means that it uses the lowest possible number of bits to encode the probabilistic data structure, for a known [n, k] combination. Although the encoding mechanism described below is here used to encode a probabilistic data structure, it should be understood that the method might equally be used to efficiently encode any sparse bit-field. Examples of suitable applications include compressing differentially encoded messages or compressing reliable/lossless sparse data structures.

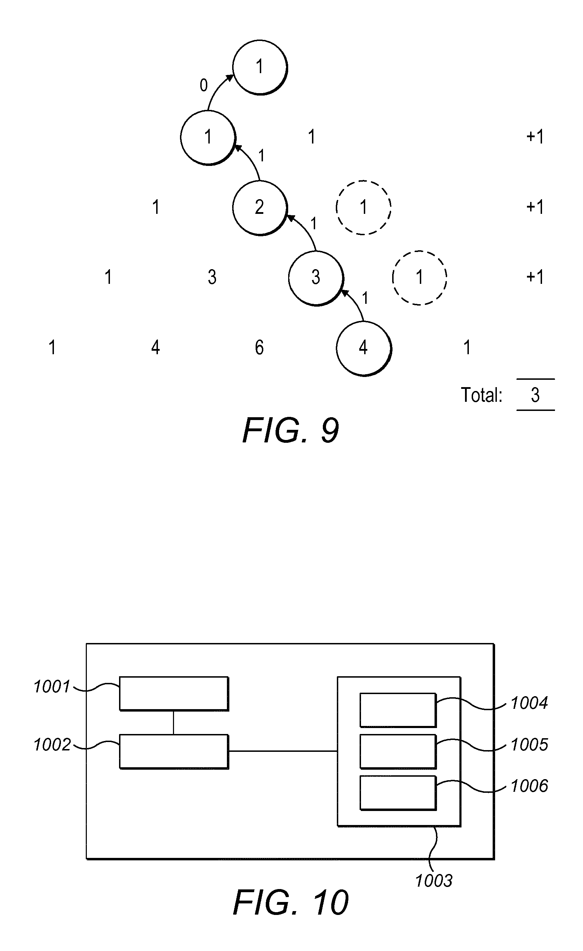

In one example, each label is a number. This number may be a sum of binomial coefficients. Each possible combination (i.e. each bit-field that is possible with parameters k and n) can be represented by a unique set of binomial coefficients. The encoding method may iteratively sum the binomial coefficients along a path in Pascal's triangle from $^nC_k$ towards the apex. Each coefficient in the triangle forms a potential step on the way, and the value of the corresponding bit in the bit-field determines the direction that the path takes at any point. Each path is unique to a particular bit-field with a given n and k, so a sum of coefficients encountered while plotting the path can be unambiguously decoded into the originating bit-field. An example of a suitable method for obtaining unique identifiers is shown in Figures 8 and 9.

The first step is to identify $^nC_k$, which forms the starting point of the process (step 801). Each step in the method takes a step towards the apex of the triangle. The next step is to look at the bit-field and determine whether the first bit is a majority or a minority bit (step 802). The bit-field will usually contain a mixture of ones and zeros; the majority bit is whichever predominates out of the two (this is usually zero for sparse data fields). The majority/minority status of the bit determines which path is taken from the two available in the direction of the apex (unless the coefficient is at the edge of the triangle).

When a majority bit is encountered, the method:

- Takes the path towards the centre of Pascal's triangle (step 803), and
- Adds the other coefficient (from the path that was not taken) to an accumulator (step 804).

When a minority bit is encountered, the method:

- Takes the path away from the centre (step 805), and
- Does not change the accumulator (step 806).

The reason for this is that at every encounter of a bit the number-space is split in two. One part of the number-space corresponds to that bit being a minority bit, and the other part to it being a majority bit.

The process repeats while there are still bits to be processed in the bit-field (step 807) and the path has not hit an edge of the triangle (step 808). The value of the accumulator at the end of this process is the unique label for the bit-field (809).

A code version of this technique is given in the appendix.

A practical example of this encoding method is recorded in table 1 below for n=4 and k=3. This example may be understood with reference to the Pascal's triangle shown in Figure 9, which has been marked up with the path taken for the first option: 1110.

Table 1: encoding for n=4 and k=3

| Bit-field (Little-endian) | N | k | $^nC_k$ | ceil($\log_2(^nC_k$ -1)) | Sum of coefficients | Encoding |
|---|---|---|---|---|---|---|
| 1,1,1,0 (=7) | 4 | 3 | 4 | 2 | 1+1+1 (edge reached) | 3 |
| 1,1,0,1 | 4 | 3 | 4 | 2 | 1+1+0 (edge reached) | 2 |
| (=11) | | | | | | |
| 1,0,1,1 (=13) | 4 | 3 | 4 | 2 | 1+0 (edge reached) | 1 |
| 0,1,1,1 (=14) | 4 | 3 | 4 | 2 | 0 (edge reached) | 0 |

In this example the bit-field is processed from left to right but the bit-field may be processed in any order providing this order is known by the entity that will be decoding the compressed bit-field.

The compressed bit-field may be decoded by reversing the process described above, provided that n and k are known, enabling $^nC_k$ to be identified and which role of minority/majority bit is being played by "one" and "zero". A code version of this technique is given in the appendix. The decoding method commences at $^nC_k$ in Pascal's triangle and compares the coefficient that would have been accumulated during coding if the bit in question is a majority bit with the unique label of the bit-field.

If the unique label is greater than that coefficient:

- the bit is determined to be a majority bit; and
- the coefficient is decremented from the unique label.

If the unique label is less than that coefficient:

- the bit is determined to be a minority bit; and
- the unique label is left unchanged.

This process then repeats from the appropriate coefficient in Pascal's triangle unit the bit-field is filled with the appropriate minority and majority bits.

This binomial compression method is optimal when a bit-field has no structure. It may be applied to any suitable bit-field, not just those generated using the mechanism described above. It may, for example, also be used compress the output of a Bloom filter. The result is a space-efficient probabilistic data structure, which has many practical advantages in terms of storage (if the data structure is to be stored in memory), bandwidth (if the data structure is to be transmitted over a wireless link) etc.

An example of an apparatus configured to implement the techniques described above is shown in Figure 10. The apparatus comprises an extraction unit 1001 configured to obtain suitable information for inputting into the bit-field generator 1002. The bit-field generator is configured to apply hash functions to the extracted data and thereby generate a bit-field. The compression unit 1003 is configured to compress the bit-field. It may be implemented separately from the compression unit and the bit-field generator. The compression unit might, for example, be configured to receive the bit-field from an external source via either a wired or wireless link. The compression unit may further comprise a coefficient identifier 1004 configured to identify relevant coefficients in Pascal's triangle, a path determination unit 1005 configured to identify paths through Pascal's triangle and an accumulator 1006 for summing the relevant coefficients and thereby forming the unique label for the bit-field.

An apparatus configured to implement the decoding techniques described above may be similar to the apparatus shown in Figure 10. The compression unit might be more correctly termed a "decompression unit" for a decoding apparatus but it is nonetheless likely to contain many similar functional units as a compression unit, such as e.g. a coefficient identifier and a path determination unit. The accumulator in this example may be configured to decrement rather than sum. In many implementations an encoding apparatus will also be a decoding apparatus, and therefore the functional units it comprises are likely to double as encoding and decoding units.

The structures shown in Figure 10 (and indeed all block apparatus diagrams included herein) are intended to correspond to a number of functional blocks in an apparatus. This is for illustrative purposes only. Figure 10 is not intended to define a strict division between different parts of hardware on a chip or between different programs, procedures or functions in software. In some embodiments, some or all of the algorithms described herein may be performed wholly or partly in hardware. In many implementations, the extraction unit, bit-field generator and compression will be implemented by a processor acting under software control (e.g. the CPU of a communication device). Any such software is preferably stored on a non-transient computer readable medium, such as a memory (RAM, cache, hard disk etc) or other storage means (USB stick, CD, FLASH, ROM, disk etc). An example of code for implementing the compression unit is given in the appendix.

Returning to the example of a base station transmitting probabilistic acknowledgements, additional information may be used to reduce the probability of false positive acknowledgements. If messages can be subdivided into several categories (e.g. by using scheduling information, message priority or message content), then each category can be supplied with its own independent probabilistic data structure. This can reduce the false positive rate, vary QoS between message categories, and provide definitive negative acknowledgements for some categories of message. In the limit, each slot of airtime could be associated with information capable of representing one acknowledgement. For example, this number could be the hash of the single message that was successfully received in this slot.

Pre-filtering can also be used to reduce the number of false positives. A pre-filtering operation can give a definitive negative acknowledgement to a proportion of messages. The message opportunities (e.g. timeslots) associated with negative acknowledgement might then be communicated separately from the positive acknowledgements in a compressed form (this could be in the same message at the positive acknowledgements or in a different message). A combination of pre-filtering with probabilistic acknowledgement can efficiently reduce the false positive acknowledgement rate because a terminal can perform a double check against the negative acknowledgements before deciding that its message has been successfully received by the base station.

There are several ways to compress the pre-filtering information, both in a lossless and lossy fashion. One lossless method, for example, would be to use the binomial encoding described in an earlier section. A sparse bit-field might be generated representing which timeslots (or other categorisation) contained a negatively acknowledged message.

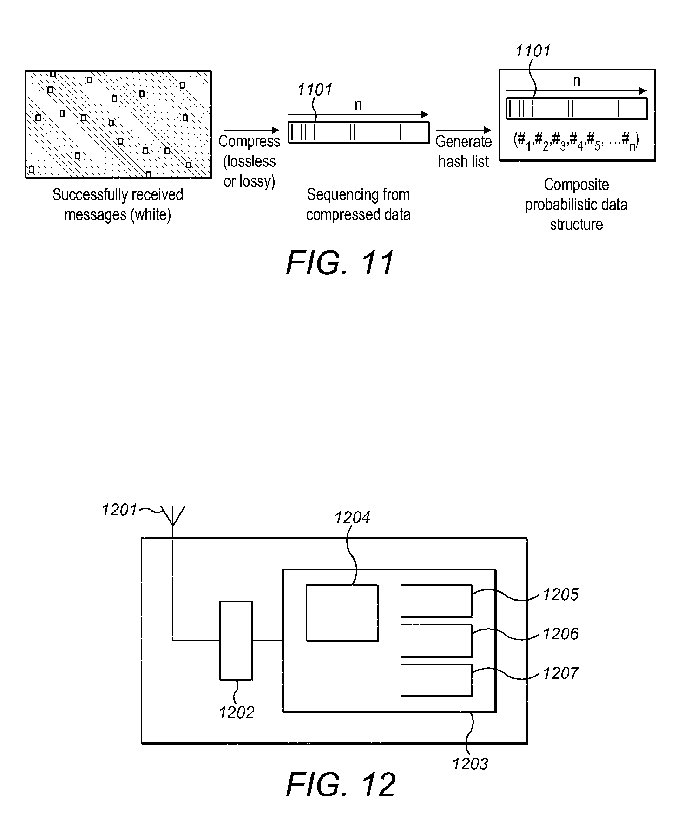

Lossy pre-filtering (using a lossy compression method) would further reduce the capacity required. The parameters of the lossy compression method affect the probability of false ACK and NAK. The probabilistic data structure described in an earlier section is a lossy pre-filtering method with good performance. This data structure provides both filtering and sequencing. An example is shown in Figure 11, in which a pre-filtering stage is first used to compress the space of received messages. Sequencing information can be derived from the compressed data and used to order a list of probabilistic data structures (e.g. hashes). Each hash corresponds to a received messages, and the elements relating to messages 1101 are at the same position of being fourth out of seven entries in the compressed sequence as it is in the composite probabilistic data structure.

Combining the concepts of categorisation and pre-filtering may yield greater benefits. Pre-filtering can be used to remove many false positives, and provide inherent sequencing information. For example, all the timeslots that pass the pre-filter can be implicitly placed in-order to derive a sequence number. This yields a list of timeslots for which there is a positive acknowledgement. An ambiguity may exist in these positive acknowledgements; since a timeslot might be multiply-occupied (e.g. by two colliding messages), further information may be required to resolve the ambiguity. This information can be provided as a list of message hashes, where each entry in the list is associated with a specific timeslot. Each entry in the list of message hashes is a probabilistic data structure. Because each terminal only checks one entry in the list, there is a substantially reduced false error rate. This is illustrated in Figure 11.

The probabilistic acknowledgement scheme may be usefully applied in a variety of ways. For example, every message could include a "reliability" value. The value would encode the number of entries that message should receive in the probabilistic data structure (e.g. the same message could be hashed with several different salts). This would allow selected messages to be acknowledged with extra reliability. Similarly, selected messages may be marked as not requiring any acknowledgement. A terminal can periodically assess the reliability of the channel by requesting an acknowledgement.

Another application is to allow power or duty cycle constraints to be met. The base station can vary the length of the probabilistic data structure, so that its transmissions are of any chosen length. For example, the base station could transmit a fixed amount of data for each periodic acknowledgement, which would cause the false error rate to vary. Alternatively, it could choose a fixed error rate, and transmit a varying amount of data that meets average duty cycle requirements over a longer period (e.g. 1 hour). Using this method, the instantaneous duty cycle can be adapted to the amount of traffic, but maintained within a long-term average.

Another variation is to acknowledge a set of messages, rather than individual messages. This allows further efficiency gains (since the base station needs to acknowledge fewer objects). The acknowledgement may be generated by higher layers in the communication system, such that (for example) only messages that pass authentication checks are acknowledged. Furthermore, acknowledgements might be sent on behalf of an entity outside the communications system, verifying that messages have been correctly interpreted and processed by that entity. The information required to compute the acknowledgement might incorporate information that is only accessible to the higher layer or outside entity.

The probabilistic acknowledgement method allows also message delivery acknowledgement to be authenticated. For example, a successfully received message could be encrypted (or hashed with a key) before being inserted into the probabilistic data structure. This would prevent a malicious base station from falsely acknowledging messages, since it would be unable to acknowledge the messages without the terminal's encryption keys. The malicious base station could increase the number of false positives, but this would not trick the terminal: the terminal would track the false probability rate, and the number of ACKs and NAKs it receives, to compute the likelihood of its message being delivered.

An example of a communication device such as a base station is shown in Figure 12. The base station is configured for wireless communication and it may configured to communicate with a plurality of terminals in a particular geographical area (or "cell"). It comprises an antenna 1201 and a radio frequency unit 1202. It also comprises a baseband processor 1203, which may be configured to implement any or all of the elements of the apparatus shown in Figure 10 (as represented by probabilistic data structure generator 1204). The baseband processor also incorporates an encryption unit 1205, a scheduler 1206, and an acknowledgement unit 1207 for keeping track of successfully received messages.

The communication device might also be configured to adjust the number of times it transmits a particular in dependence not only on the success of its previous transmissions, link quality, required quality of service etc but also the false probability rate of the acknowledgements it is getting from another communication device. The communication device in this example is likely to be a communication terminal receiving probabilistic acknowledgements from a base station. Thus even if the acknowledgement system itself is unreliable the terminal adjusts its own behaviour in dependence on the quality of the feedback it is getting from the base station. Therefore the reliability of data transfer in the network as a whole can be maintained despite the use of probabilistic acknowledgements by the base station.

There are other potential uses for the probabilistic data structure described above, including all the standard uses of Bloom filters. Bloom filters are used frequently in large databases, to reduce the number of large search operations.

The data-structure described above is more compact, although updating or decoding it can involve higher processing requirements than a Bloom filter. This means that it may be most appropriate for systems where processing power is cheaper than storage space or network traffic. It also has the helpful property of providing sequencing information, which a Bloom filter does not. Some other uses in a radio context include:

Probabilistic scheduling

It is useful to schedule transmissions by devices in a communication network to reduce collisions between packets "Normal" scheduling is expensive; it requires a lot of information. This information requirement typically scales with the number and complexity of scheduled events. The data structure described above provides some inherent sequencing information, enabling devices to be placed in some sequence for scheduling. This sequencing could, for example, be used to indicate the relative order of allocated timeslots or the relative position of an allocated frequency channel within a group of possible channels. This allows communication resources to be pseudorandomly allocated to different devices, which is very helpful in reducing packet collision rates. The reduced collision rate is determined by the false positive rate of the data-structure. The scheduler can further reduce the collision rate by deleting entries in the probabilistic data structure that overlap. This method requires much less data than traditional mechanisms for communicating scheduling information.

Associative array or Hash table

The ordering property of the data-structure means it can be used as a space-efficient alternative to hash tables. Because the data-structure has ordering, it can be used to associate a key (which is inserted into the data structure) with an object (which is inserted into a list).

There are also other applications in which the method for compressing a sparse data field described above might beneficially be used. For example:

Compressing differentially encoded data

If you have a sequence of packets with similar data, it's a known technique to encode only the differences between the packets. These differences form (in general) sparsely, randomly populated bit-fields. Most compression methods need some sort of tuning for the expected types of data, or need to run over a long period to build up a library of typical tokens. The compression method described above is ideally suited to compressing sparsely, randomly populated bit-fields, however. It also operates efficiently with unpredictable, unknown types of data. It is therefore an efficient choice for compressing sequences of similar packets.

Encoding large dictionaries of random tokens

Each token may be represented as a single bit in a suitably-sized bit-field, which may be compressed using the technique described above.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

Appendix: Binomial encoding method (code sample)

The following code sample (Python) can efficiently encode and decode sparse bit-fields of arbitrary length. This produces one possible labelling of binomial combinations, but other similar labelling sequences can be constructed.

The code sample assumes that there is a "pascal" class with a method "nchoosek(n, k)" providing the binomial coefficient.

```
class pascal_encoder(pascal):
  def encode(this, n, value):
    result = 0
    invert = False
```

```
    # First, find out k (how many bits are set)
    k = 0
    for i in range(0, n):
      testmask = 1 << i
      if (value & testmask): k += 1
    k_initial = k
    if k_initial*2 > n:
      invert = True
      k = n - k_initial # Inverting the bit-field
    numjoits = math.ceil(math.log2(this.nchoosek(n, k)))
    # Go through each bit, and see if it is set, and generate the
result
    for i in range(0, n-1) :
      if k == 0: break
      testmask = 1 << i
      if ((value & testmask) == 0) ^ invert: # If bit is not
set, then add on (n-1)C(k-1)
        k_lookup = k
        result += this.nchoosek(n-1, k-1)
      else:
        k -= 1 # One less set bit
      n -=1 # One less bit in range
    return (k_initial, result, "Encoded in: ", num_bits)
  def decode (this, n, k, coded):
    value = 0
    invert = False
    k_initial = k
    n_initial = n
    if k_initial*2 > n:
      invert = True
      k = n - k_initial # Because we're inverting
    # Do this bitwise
    for i in range(0, n-1):
      if k == 0: break
      comparison = this.nchoosek(n-1, k-1)
      bitset = coded < comparison # Bit must be set to be in this
 range
      if not bitset: coded -= comparison
      if bitset:
        value |= << i
        k -= 1 # One less set bit
      n -= 1 # One less bit in range
    if k > 0: value |= 1 << (n_initial-1) # Because we can
determine the last bit by default
    if invert: value ^= (1 << n_initial)-1 # Final inversion
    return value
```

ANNEX TO THE DESCRIPTION:

1. A communication device configured to identify a message that it has received successfully from another communication device and transmit an acknowledgement of the message that ambiguously identifies the message as being a message that was successfully received by the communication device.

2. A communication device as in 1, configured to form the acknowledgement to acknowledge a group of messages that it has received successfully and to ambiguously identity those messages such that the acknowledgement acknowledges more messages than were received successfully by the communication device.

3. A communication device as in 1 or 2, configured to identify information that uniquely identifies each message that it has received successfully and form the acknowledgement in dependence on that information.

4. A communication device as in 3, configured to identify, as the information, one or more of the identity of the communication device from which it received the message, the contents of the message and metadata associated with the message.

5. A communication device as in 3 or 4, configured to form the acknowledgement by inputting the information into a hash function that maps the information to one or more locations in a bit-field.

6. A communication device as in 5, configured to set a bit in each of the one or more locations that the information is mapped to by the hash function to represent the message.

7. A communication device as in 5 or 6, configured to form the acknowledgment by inputting the information into a hash function that will map different information to the same one or more locations in the bit-field.

8. A communication device as in any of 1 to 7, configured to form the acknowledgement to be a probabilistic data structure.

9. A communication device as claimed in any of 1 to 8, configured to form the acknowledgement to be an error-resilient probabilistic data structure.

10. A communication device as in 9, configured to form the acknowledgement to be an error-resilient probabilistic data structure that incorporates redundancy by setting more bits in the probabilistic data structure to identify a successfully received message than a communication device receiving the acknowledgement will require to be set in the probabilistic data structure in order to recognise that message as having been successfully received.

11. A communication device as in any of 5 to 10, configured to map some messages that it has received successfully to more locations in the bit field that other messages that it has received successfully.

12. A communication device as claimed in any of claims 5 to 11, configured to form the acknowledgment by representing the bit-field as a binomial coefficient that represents the number of possible arrangements of set and non-set bits in the bit-field.

13. A communication device as claimed in any preceding claim, configured to associate a successfully received message with a particular message category and form the acknowledgement of that message in dependence on its message category.

14. A communication device as in 13, configured to form the acknowledgment such that the message is identified with a degree of ambiguity that is dependent on its message category.

15. A communication device as in 13 or 14, configured to not acknowledge some messages that it received successfully in dependence on a message category associated with those messages.

16. A communication device as in any of 1 to 16, configured to, prior to transmitting the acknowledgement, identify messages that it has not received successfully.

17. A communication device as in 16, configured to transmit a negative acknowledgment identifying the messages that it has not received successfully.

18. A communication device as in 17, configured to transmit a negative acknowledgement that ambiguously identifies the messages that have not been successfully received.

19. A communication device as claimed in any of 1 to 18, configured to:

associate each message that it has successfully received with a timeslot;
form the acknowledgement as a bit-field in which each set bit represents a message that was successfully received, the order of the set bits in the bit field reflecting the order of the time slots associated with the messages that those set bits represent.

20. A communication device as claimed in claim 19, configured to, if it determines that two of the messages are represented by the same location in the bit-field, incorporate information to resolve this ambiguity in the acknowledgement.

21. A communication device as in any of 1 to 20, configured to associate one or messages with a reliability value and to form the acknowledgement as a bit-field in which a message having a higher reliability value is represented by more entries in the bit-field than a message having a lower reliability value.

22. A communication device as in any of 1 to 21, configured to transmit acknowledgements of fixed length, whereby the ambiguity with which a message is identified varies in dependence on the number of messages that the communication device has successfully received.

23. A communication device as in any of 1 to 22, configured to transmit acknowledgements that identify a successfully received message with a fixed degree of ambiguity, whereby the length of the acknowledgements varies in dependence on the number of messages that the communication device has successfully received.

24. A communication device as in any of 1 to 23, configured to form the acknowledgement to include an encrypted version of a message that it has successfully received.

25. A communication device configured to adjust the number of times that it retransmits a message to another communication device in dependence on a degree of ambiguity that is associated with acknowledgements of its messages that it receives from that communication device.

26. A method for acknowledging a message received successfully from a communication device comprising transmitting an acknowledgement of the message that ambiguously identifies the message as being a message that was successfully received by the communication device.

27. A method for encoding a bit-field that consists of a first number of set bits and a second number of non-set bits, the method comprising:

> determining the number arrangements of the first number of set bits and the second number of non-set bits that are possible within the bit-field; and
> representing the bit-field by an identifier that identifies its arrangement of the first number of set bits and the second number of non-set bits uniquely amongst the number of possible arrangements of those bits within the bit-field.

28. A method as in 27, comprising representing the bit-field by a number that is less than or equal to the number of possible arrangements of the bits within the bit-field.

29. A method as in 27 or 28, comprising determining the number of possible arrangements of the bits within the bit-field to be the binomial coefficient that represents the number of arrangements of the first number of set bits and the second number of non-set bits that is possible within a bit-field having a length equal to the sum of the first and second numbers.

30. A method as in 29, comprising forming the identifier by summing selected coefficients in Pascal's triangle along a path that commences with the binomial coefficient.

31. A method as in any of 27 to 30, comprising designating one of the set bits or the non-set bits as being a majority bit type and the other of the set bits and the non-set bits as being a minority bit type in dependence on which of the first and second numbers is larger.

32. A method as in 31 as dependent directly or indirectly on 29, comprising forming the identifier by:

> selecting a first bit from the bit-field;
> identifying the two coefficients in the preceding row of Pascal's triangle to the binomial coefficient that lie on a diagonal path relative to the binomial coefficient;
> selecting the inner of those two coefficients as a coefficient on the path if the first bit is a majority bit;
> selecting the outer of those two coefficients as a coefficient on the path if the first bit is a minority bit

33. A method as claimed in claim 32, comprising, if the first bit is a majority bit, summing the coefficient of the two coefficients that is not the path coefficient in an accumulator.

34. A method as in 32 or 33, comprising, if the first bit is a minority bit, leaving the accumulator unchanged.

35. A method as in any of 32 to 34 comprising repeating the steps of 32 to 34 for each subsequent bit in the bit-field, wherein each successive step treats the path coefficient of the preceding step as the binomial coefficient, until either: (i) the path reaches the edge of Pascal's triangle or (ii) the steps of 32 to 34 have been performed for all bits in the bit-field.

36. A method as in any of 27 to 35, comprising forming the bit-field by, for each element represented by the bit-field, setting a bit at a single location in the bit-field.

37. A method as in any of 27 to 36, comprising forming the bit-field by applying a hash function to data representing an element to be represented by the bit-field.

38. A method as in 37, comprising applying a hash function that maps that data to one location in the bit-field.

39. A method as in 37 or 38, comprising applying a hash function that maps data representing different elements to the same location in the bit-field.

40. A probabilistic data structure encoded according to the method of any of 27 to 39.

41. A communication device configured to form an acknowledgement that ambiguously identifies a message as being a message that was successfully received by the communication device by representing that message via one or more entries in a bit-field and encoding that bit-field in accordance with a method according to any of 27 to 39.

42. An apparatus for encoding a bit-field that consists of a first number of set bits and a second number of non-set bits, the apparatus being configured to:

determine the number arrangements of the first number of set bits and the second number of non-set bits that are possible within the bit-field; and
represent the bit-field by an identifier that identifies its arrangement of the first number of set bits and the second number of non-set bits uniquely amongst the number of possible arrangements of those bits within the bit-field.

43. A method for decoding an identifier that represents a bit-field consisting of a first number of set bits and a second number of non-set bits, the method comprising:

determining a binomial coefficient that represents the number of arrangements of the first number of set bits and the second number of non-set bits that is possible within a bit-field having a length equal to the sum of the first and second numbers;
identifying a combination of binomial coefficients in Pascal's triangle that sum to form the identifier; and
determining the arrangement of set bits and non-set bits in the bit-field in dependence on a path through Pascal's triangle that is represented by the identified combination of binomial coefficients and which commences at the binomial coefficient representing the number of possible arrangements.

44. A method as in 43, comprising designating one of the set bits or the non-set bits as being a majority bit type and the other of the set bits and the non-set bits as being a minority bit type in dependence on which of the first and second numbers is larger.

45. A method as in 44, comprising determining the bit type of a first bit in the bit-field by:

identifying a coefficient in the preceding row of Pascal's triangle to the binomial coefficient that lies on a diagonal path relative to the binomial coefficient;
if that coefficient is less than the identifier, determining that the first bit is a majority bit type; and
if that coefficient is more than the identifier, determining that the first bit is a minority bit type.

46. A method as in 45, comprising repeating the steps of claim 45 for subsequent bits in the bit-field by:

if the coefficient is less than the identifier, decrementing the coefficient from the identifier and treating the decremented value as the identifier for the succeeding step;

if the coefficient is more than the identifier, leaving the identifier unchanged for the succeeding step.

47. An apparatus for decoding an identifier that represents a bit-field consisting of a first number of set bits and a second number of non-set bits, the apparatus being configured to:

determine a binomial coefficient that represents the number of arrangements of the first number of set bits and the second number of non-set bits that is possible within a bit-field having a length equal to the sum of the first and second numbers;

identify a combination of binomial coefficients in Pascal's triangle that sum to form the identifier; and

determine the arrangement of set bits and non-set bits in the bit-field in dependence on a path through Pascal's triangle that is represented by the identified combination of binomial coefficients and which commences at the binomial coefficient representing the number of possible arrangements.

48. A scheduler for scheduling communications of a plurality of terminals over a communication network, the scheduler being configured to:

form a probabilistic data structure to represent the allocation of communication resources to the plurality of terminals by mapping each allocation to at least one location in the probabilistic data structure and by mapping at least two of said allocations to the same location; and

cause the allocations to map to locations in the probabilistic data structure whose arrangement with respect to each other reflects a relative arrangement of the allocated communication resources.

49. A scheduler as in 48, configured to:

allocate each of the plurality of communication terminals a timeslot for communicating over the network; and

cause the allocations to map to locations whose arrangement with respect to each other reflects the relative arrangement in time and/or frequency of the allocated timeslots.

## Claims

1. A communication device configured to identify a message that it has received successfully from another communication device and transmit an acknowledgement of the message that ambiguously identifies the message as being a message that was successfully received by the communication device.

2. A communication device as claimed in claim 1, configured to form the acknowledgement to acknowledge a group of messages that it has received successfully and to ambiguously identity those messages such that the acknowledgement acknowledges more messages than were received successfully by the communication device.

3. A communication device as claimed in claim 1 or 2, configured to identify information that uniquely identifies each message that it has received successfully and form the acknowledgement in dependence on that information.

4. A communication device as claimed in claim 3, configured to form the acknowledgement by inputting the information into a hash function that maps the information to one or more locations in a bit-field.

5. A communication device as claimed in claim 4, configured to set a bit in each of the one or more locations that the information is mapped to by the hash function to represent the message.

6. A communication device as claimed in claim 4 or 5, configured to form the acknowledgment by inputting the information into a hash function that will map different information to the same one or more locations in the bit-field.

7. A communication device as claimed in any preceding claim, configured to form the acknowledgement to be an error-resilient probabilistic data structure that incorporates redundancy by setting more bits in the probabilistic data structure to identify a successfully received message than a communication device receiving the acknowledgement will require to be set in the probabilistic data structure in order to recognise that message as having been successfully received.

8. A communication device as claimed in any of claims 4 to 8, configured to form the acknowledgment by representing the bit-field as a binomial coefficient that represents the number of possible arrangements of set and non-set bits in the bit-field.

9. A communication device as claimed in claim 9, configured to associate a successfully received message with a particular message category and form the acknowledgment such that the message is identified with a degree of ambiguity that is dependent on its message category.

10. A communication device as claimed in any preceding claim, configured to identify messages that it has not received successfully and transmit a negative acknowledgement that ambiguously identifies the messages that have not been received successfully.

11. A communication device as claimed in any preceding claim, configured to:

   associate each message that it has successfully received with a timeslot;
   form the acknowledgement as a bit-field in which each set bit represents a message that was successfully received, the order of the set bits in the bit field reflecting the order of the time slots associated with the messages that those set bits represent.

12. A communication device as claimed in any preceding claim, configured to associate one or more messages with a reliability value and to form the acknowledgement as a bit-field in which a message having a higher reliability value is represented by more entries in the bit-field than a message having a lower reliability value.

13. A communication device as claimed in any preceding claim, configured to transmit acknowledgements of fixed length, whereby the ambiguity with which a message is identified varies in dependence on the number of messages that the communication device has successfully received.

14. A communication device as claimed in any preceding claim, configured to transmit acknowledgements that identify a successfully received message with a fixed degree of ambiguity, whereby the length of the acknowledgements varies in dependence on the number of messages that the communication device has successfully received.

15. A method for acknowledging a message received successfully from a communication device comprising transmitting an acknowledgement of the message that ambiguously identifies the message as being a message that was successfully received by the communication device.

Determine number of
possible arrangements of
set & non-set bits

~101

Allocate identifier that
uniquely identifies bit
arrangement

~102

Represent bit-field with
identifier

~103

## FIG. 1

All messages

Messages
successfully
received

Messages
recently
transmitted

## FIG. 2

All messages

Message successfully received

Message acknowledged

Messages recently transmitted

FIG. 3

X                                    Y

ACK •————————1————————→• ACK

                          ε

NAK •————————————————→• NAK
              1-ε

FIG. 4

Identify successfully
received messages — 501

Identify information
identifying each message — 502

Input information into
hash function — 503

Compress data structure — 504

Transmit compressed
data structure — 505

## FIG. 5

Create blank bit-field — 601

Hash each element — 602

Set bits at locations
indicated by hash outputs — 603

Compress bit structure — 604

## FIG. 6

n

*FIG. 7*

```
801 ──┤ Identify $^\wedge C_K$ │
           │
           ▼
802 ── Majority/minority
            bit?
   Majority ◄───┤───► Minority

803 ── Take path towards centre          Take path away from ── 805
        of Pascal's triangle           centre of Pascal's triangle

804 ── Add coefficient of other         Leave accumulator ── 806
        path to accumulator                unchanged

           │
           ▼
807 ── All bits processed?      No
           │
           ▼
808 ── Reached edge      No
        of triangle?
           │
           ▼
809 ── Return value of
        accumulator as label
```

*FIG. 8*

FIG. 9

FIG. 10

*1101*

Successfully received messages (white)

Compress (lossless or lossy)

*1101*

n

Sequencing from compressed data

Generate hash list

*1101*

n

$(\#_1, \#_2, \#_3, \#_4, \#_5, \dots \#_n)$

Composite probabilistic data structure

## FIG. 11

*1201*

*1204*

*1205*

*1206*

*1207*

*1202*

*1203*

## FIG. 12